(19) Europäisches Patentamt
European Patent Office
Office européen des brevets

(11) Publication number: 0 304 622
A2

(12) # EUROPEAN PATENT APPLICATION

(21) Application number: 88111675.0

(22) Date of filing: 20.07.88

(51) Int. Cl.4: C08K 5/09 , C08K 3/22 , C08L 71/04 , C08L 51/04 , C08K 13/02

(30) Priority: 24.08.87 US 88687

(43) Date of publication of application: 01.03.89 Bulletin 89/09

(84) Designated Contracting States: DE FR GB IT NL

(71) Applicant: GENERAL ELECTRIC COMPANY
1 River Road
Schenectady New York 12305(US)

(72) Inventor: Haaf, William Robert
19 Scotch Pine Drive
Voorheesville New York 12186(US)
Inventor: Axelrod, Robert Jay
13 Sussex Road
Glenmont, New York 12077(US)

(74) Representative: Catherine, Alain
General Electric France Service de Propriété Industrielle 18 Rue Horace Vernet B.P. 76
F-92134 Issy-les-Moulineaux Cédex(FR)

(54) **High stability brominated phthalate compounds as flame retardants for resin compositions containing polyphenylene ethers.**

(57) Flame resistance of blends of polyphenylene ether resin and high impact polystyrene are upgraded by including both a stable brominated phthalate compound and antimony oxide, which work in synergistic combination in the compositions. The present flame retardant combination not only exhibits good heat stability improved flow and impact properties, but unlike many prior art flame retardants of greater volatility, also resists migration to the surface of molded parts.

EP 0 304 622 A2

# FLAME RETARDANT POLYPHENYLENE ETHER COMPOSITIONS CONTAINING BROMINATED PHTHALATES

## BACKGROUND OF THE INVENTION

### 1. FIELD OF THE INVENTION

The present invention relates to flame retardant polyphenylene ether compositions and, more specifically, to blends of a polyphenylene ether resin and a high impact polystyrene in which a stable brominated phthalate compound and antimony oxide are used in combination to impart flame resistance and to upgrade certain other physical properties of the compositions.

### 2. DESCRIPTION OF THE PRIOR ART

Thermoplastic compositions of polyphenylene ether (oxide) resins and high impact polystyrenes are known to be useful for injection molding into a variety of articles characterized by highly desirable property profiles. With the wider use of these compositions in products where good flame resistance is an important requirement, the need has grown for additives that upgrade the flame retardance of the composition without significantly detracting from other desired properties. Most flame retardant additives for polyphenylene ether compositions have been non-polymeric compounds that are relatively low in molecular weight. Many of these tend to juice or bloom, that is, in essence to volatilize or migrate to the surface of the composition during the molding process.

To attempt to overcome this problem recent efforts have involved the investigation of higher molecular weight materials, and especially styrene oligomers and polymers having bromine substituents bound in the chain. For instance, U.S. Patent 4,279,808 (Hornbaker, et al.) describes moldable thermoplastic resins formed by the polymerization of nuclear-brominated styrenes in the presence of rubber. The resulting resin is useful as such but can also be blended with other resins, including polyphenylene oxides, to impart increased flame resistance to the blend.

A number of other patents describe compositions of polyphenylene ether and polystyrene in which the polystyrene can theoretically contain flame retardant halogen atoms such as bromine or chlorine. These include U.S. Patent 3,933,941 (Yonemitsu, et al.), U.S. Patent 4,355,126 (Haaf, et al.) and U.S. Patent 4,448,931 (Sugio, et al.).

Also of interest are recent developments in which various copolymers of styrene and bromostyrene are included in polyphenylene ether resin blends to improve the flame resistance. These are the subject of pending U.S. continuation applications Serial No. 762,805 and Serial No. 762,806, of August 2, 1985 (both in the names of Glenn D. Cooper and Arthur Katchman), as well as pending U.S. applications Serial No. 675,344 of November 27, 1984 (Abolins, Aycock and Kinson) and Serial No. 675,715 of November 28, 1984 (Axelrod and Cooper) issued November 26, 1986 as U.S. Patent 4,624,979. Laid open United Kingdom applications 2076830A and 2076831A are essentially foreign counterparts of the first two above mentioned U.S. applications.

Several patents describe the preparation of brominated polystyrene oligomers having fire retardant utility. Such materials are prepared by the action of elemental bromine on the hydrogenated polystyrene oligomer as disclosed in U.S. Patents 4,074,033 and 4,143,221 (Naarmann, et al.). The usefulness of brominated styrene oligomers for certain polymers is described in Wurmb, et al., U.S. Patent 4,107,231 (for linear polyesters), in Theysohn, et al., U.S. Patent 4,137,212 (for nylon compositions), and in Neuberg, et al., U.S. Patent 4,151,223 (for fibrous or filamentous linear thermoplastic polyesters).

Japan patent 90,256(1985) describes a flame retardant polyphenylene ether composition said to exhibit excellent flame retardance and heat resistance, with very little migration of halogenated materials. The composition comprises, in addition to the polyphenylene ether resin, a brominated styrene polymer and optionally other styrene polymers such as rubber modified polystyrene and SBR triblock copolymers. A particular brominated styrene polymer shown is PYRO-CHEK 68PB, which is described as a brominated polystyrene containing 68 per cent bromine and having a number average molecular weight of 150,000.

It is known in the art that certain brominated phthalate and phthalic anhydride compounds may find use in rendering thermoplastic compositions flame retardant. Included under such broad designations are, for example, a 2-hydroxypropyl polyethylene glycol monomethylether tetrabromophthalate, produced by Pennwalt Corporation, and a mixed diethylene glycol/propylene glycol ester of tetrabromophthalic anhydride, produced by Great Lakes Chemical Company. However, the use of the above-mentioned compounds results in compositions which exhibit inferior physical properties, especially in large scale molding operations.

## SUMMARY OF THE INVENTION

With the present invention, the discovery has been made that useful, flame retardant blend compositions of a polyphenylene ether resin and a high impact polystyrene can be made by incorporating a stable brominated phthalate compound in conjunction with antimony oxide. The resulting compositions provide, in addition to good flame retardant properties, excellent resistance to migration and blooming, improved impact and flow properties as well as good thermal stability.

The blends are extrudable and moldable into a broad spectrum of shaped plastic products.

## DESCRIPTION OF THE INVENTION

Briefly described, the compositions of the present invention comprise flame retardant thermoplastic blends of

(a) a polyphenylene ether resin;

(b) a rubber-modified, alkenyl aromatic resin;

(c) a stable brominated phthalate compound in an amount which improves the flame retardancy of the combination of (a) and (b); and, when component (c) is utilized as a flame retardant agent,

(d) antimony oxide in an amount which synergistically enhances the flame retardancy of the combination of (a), (b) and (c).

The present invention, in another aspect, is directed to polyphenylene ether-based concentrates adaptable for use in admixture with a normally flammable thermoplastic resin, said concentrate consisting essentially of:

(a) a polyphenylene ether;

(b) a stable brominated phthalate compound; and

(c) antimony oxide, the concentrate being used in an amount which renders the composition flame retardant.

The normally flammable thermoplastic resin is preferably an alkenyl aromatic resin or a derivative thereof, as defined below.

The polyphenylene ethers (also known as polyphenylene oxides) used in the present invention are a well-known class of polymers which have become very useful commercially as a result of the discovery by Allan S. Hay of an efficient and economical method of production (see, for example, U.S. Patents 3,306,874 and 3,306,875, which are incorporated herein by reference). Numerous modifications and variations have since been developed but, in general, they are characterized as a class by the presence or arylenoxy structural units. The present invention includes all such variations and modifications, including but not limited to those described hereinafter.

The polyphenylene ethers favored for use in the practice of this invention generally contain structural units of the following formula

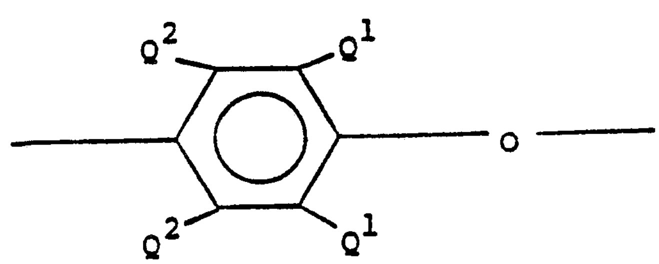

(I)

in which in each of these units each $Q^1$ is selected from hydrogen, halogen, primary or secondary lower alkyl (i.e., alkyl containing up to 7 carbon atoms), phenyl, haloalkyl or aminoalkyl wherein at least two carbon atoms separate the halogen or nitrogen atom from the benzene ring, hydrocarbonoxy, or halohydrocarbonoxy wherein at least two carbon atoms separate the halogen and oxygen atoms; and each $Q^2$ is selected from hydrogen, halogen, primary or secondary lower alkyl, phenyl, haloalkyl, hydrocarbonoxy or halohydrocarbonoxy as defined for $Q^1$. Examples of suitable primary lower alkyl groups are methyl, ethyl, n-propyl, n-butyl, isobutyl, n-amyl, isoamyl, 2-methylbutyl, n-hexyl, 2,3-dimethylbutyl, 2-,3- or 4-methylpentyl and the corresponding heptyl groups. Examples of secondary lower alkyl groups are isopropyl, sec-butyl and 3-pentyl. Preferably, any alkyl radicals are straight chain rather than branched. Most often, each $Q^1$ is alkyl or phenyl, especially $C_{1-4}$ alkyl, and each $Q^2$ is hydrogen.

Both homopolymers and copolymers are included. Suitable homopolymers are those containing, for example, 2,6-dimethyl-1,4-phenylene ether units. Suitable copolymers include random copolymers containing such units in combination with, for example, 2,3,6-trimethyl-1,4- phenylene ether units. Many suitable random copolymers, as well as homopolymers, are disclosed in the patent literature, including various Hay patents. Also contemplated are graft copolymers, including those prepared by grafting onto the polyphenylene ether chain such vinyl monomers as acrylonitrile and vinyl aromatic compounds (for example, styrene), and such polymers as polystyrenes and elastomers. Still other suitable polyphenylene ethers are the coupled polyphenylene ethers in which the coupling agent is reacted with the hydroxy groups of the two polyphenylene ether chains to increase the molecular weight of the polymer. Illustrative of the coupling agents are low molecular weight polycarbonates, quinones, heterocycles and formals.

The polyphenylene ether generally has a molecular weight (number average, as determined by gel permeation chromatography, whenever used herein) within the range of about 5,000 to 40,000 preferably within the range of about 11,500 to about 26,800. The intrinsic viscosity of the polymer is usually in the range of about 0.19 to about 0.87, preferably in the range of about 0.35 to about 0.65 deciliters per gram (dl./g.), as measured in solution in chloroform at 25° C.

The polyphenylene ethers may be prepared by known methods, and typically by the oxidative coupling of at least one corresponding monohydroxyaromatic (e.g., phenolic) compound. A particularly useful and readily available monohydroxyaromatic compound is 2,6-xylenol (in which for the above formula each $Q^1$ is methyl and each $Q^2$ is hydrogen), the corresponding polymer of which may be characterized as a poly(2,6-dimethyl-1,4-phenylene ether).

Any of the various catalyst systems known in the art to be useful for the preparation of polyphenylene ethers can be used in preparing those employed in this invention. For the most part, they contain at least one heavy metal compound, such as a copper, manganese or cobalt compound, usually in combination with various other materials.

Among the preferred catalyst systems are those containing copper. Such catalysts are disclosed, for example, in the aforementioned U.S. Patents 3,306,874 and 3,306,875, and elsewhere. They are usually combinations of cuprous or cupric ions, halide ions (i.e., chloride, bromide or iodide), and at least one amine.

Also preferred are catalyst systems containing manganese. They are generally alkaline systems containing divalent manganese and such anions as halide, alkoxide or phenoxide. Most often, the manganese is present as a complex with one or more complexing and/or chelating agents such as dialkylamines, alkanolamines, alkylenediamines, o-hydroxyaromatic aldehydes, o-hydroxyazo compounds, α-hydroxyoximes (both monomeric and polymeric), o-hydroxyaryl oximes, and α-diketones. Also useful are cobalt-containing catalyst systems. Those skilled in the art will be familiar with patents disclosing manganese and cobalt-containing catalyst systems for polyphenylene ether preparations.

Especially useful polyphenylene ethers for the purposes of this invention are those which comprise molecules having at least one of the end groups of formulas II and III, below, in which $Q^1$ and $Q^2$ are as previously defined, each $R^1$ is independently hydrogen or alkyl, providing that the total number of carbon atoms in both $R^1$ radicals is 6 or less, and each $R^2$ is independently hydrogen or a $C_{1-6}$ primary alkyl radical. Preferably, each $R^1$ is hydrogen and each $R^2$ is alkyl, especially methyl or n-butyl.

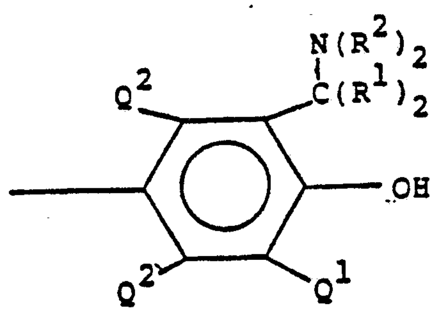

(II)

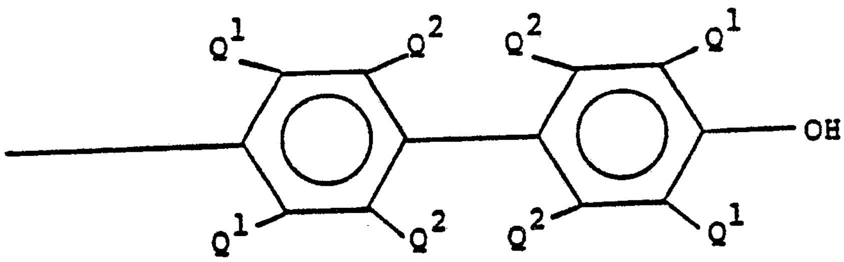

(III)

Polymers containing the aminoalkyl-substituted end groups of formula II may be obtained by incorporating an appropriate primary or secondary monoamine as one of the constituents of the oxidative coupling reaction mixture, especially when a copper- or manganese-containing catalyst is used. Such amines, especially the dialkylamines and preferably di-n-butylamine and dimethylamine, frequently become chemically bound to the polyphenylene ether, most often by replacing one of the α-hydrogen atoms on one or more $Q^1$ radicals adjacent to the hydroxy group on the terminal unit of the polymer chain. During further processing and/or blending, the aminoalkyl-substituted end groups may undergo various reactions, probably involving a quinone methide-type intermediate of formula IV, below ($R^1$ is defined as above), with beneficial effects often including an increase in impact strength and compatibilization with other blend components.

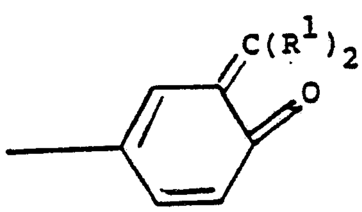

(IV)

Polymers with biphenol end groups of formula III are typically obtained from reaction mixtures in which a by-product diphenoquinone of formula V, below, is present, especially in a copper-halide secondary or tertiary amine system. In this regard, the disclosures of the U.S. Patents 4,234,706, 4,477,649 and 4,482,697 are particularly pertinent, and are incorporated herein by reference. In mixtures of this type, the diphenoquinone is ultimately incorporated into the polymer in substantial amounts, chiefly as an end group.

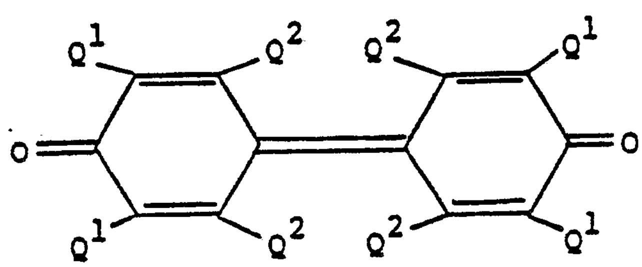

(V)

In many polyphenylene ethers obtained under the conditions described above, a substantial proportion of the polymer molecules, usually as much as about 90% by weight of the polymer, contain end groups having one or frequently both of formulas II and III. It should be understood, however, that other end groups may be present and that the invention in its broadest sense may not be dependent on the molecular structures of the polyphenylene ether end groups.

It will thus be apparent to those skilled in the art that a wide range of polymeric materials encompassing the full recognized class of polyphenylene ether resins are contemplated as suitable for use in the practice of the present invention.

The rubber-modified alkenyl aromatic resin useful as component (b) in the present compositions can generally be selected from any of the materials known in the art as high impact polystyrenes, or HIPS. In general, these modified polystyrene resins are made by adding rubber during or after polymerization of the styrene, to yield an interpolymer of rubber and polystyrene, a physical admixture of rubber and polystyrene, or both, depending on the particular process employed.

Suitable rubber modifiers include polybutadiene, polyisoprene, polychloroprene, ethylene-propylene copolymers (EPR), ethylene-propylene-diene (EPDM) rubbers, styrene-butadiene copolymers (SBR), and polyacrylates. The amount of rubber employed will vary, depending on such factors as the process of manufacture and individual requirements.

Included within this family of materials for purposes of the present invention are more recently developed forms in which such factors as the rubber particle size, the gel and cis contents of the rubber phase, and the rubber volume percent are regulated or controlled to achieve improvements in the impact resistance and other properties. These kinds of HIPS are described in the patent literature, including U.S. Patent 4,128,602 (Abolins, Katchman and Lee, Jr.), and U.S. Patent 4,528,327 (Cooper and Katchman), which are incorporated herein by reference.

Also contemplated as suitable for use are high impact polystyrenes having morphological forms which are sometimes referred to as core-shell, comprising particles of rubber encapsulated polystyrene dispersed in a matrix of polystyrene resin. Examples of this type are disclosed in U.S. Patent 4,513,120 (Bennett, Jr. and Lee, Jr.), incorporated herein by reference, as well as the above-mentioned U.S. 4,513,327.

The stable brominated phthalate compound suitable for use as component (c) of the compositions of the present invention will be those compounds which do not, or substantially do not, degrade or volatilize at or about the pro cessing temperature of the claimed compositions. Referring to FIGURE 1, it can be seen that a representative compound useful as component (c) of the presently claimed compositions maintains approximately 100% of its initial weight up to a temperature of about 510° F., 90% of its initial weight up to a temperature of about 570° F., 80% of its initial weight up to a temperature of about 600° F. and 60% of its initial weight up to a temperature of about 630° F., as measured by thermogravimetric analysis (TGA).

The stable brominated phthalate compound suitable for use as component (c) in the compositions of the present invention should preferably also be compatible with the polyphenylene ether, component (a) of the presently claimed invention. This is especially so when the brominated phthalate compound is utilized in those embodiments of the present invention wherein the polyphenylene ether, stable brominated phthalate compound and antimony oxide form a concentrate suitable for admixture with a normally flammable thermoplastic resin, e.g. polystyrene or its derivatives.

As shown in FIGURE 2, blends of the polyphenylene ether and the stable brominated phthalate compound preferably exhibit only one glass transition temperature (Tg), indicative of compatibilization between the two. Thus, particular blends of a polyphenylene ether and a stable brominated phthalate compound can be formulated to approximate the Tg of the particular normally flammable resin with which the polyphenylene ether/brominated phthalate is to be admixed. For example, a 70/30 polyphenylene ether/brominated phthalate blend is tough and transparent and has a Tg of approximately 100° C which is essentially identical to that of polystyrene. In formulating the compositions in accordance with this invention, amounts for the above-mentioned ingredients are selected which preferably fall within certain preferred ranges, as follows:

| Ingredients | Amount, Parts by Weight |
|---|---|
| (a) Polyphenylene ether | 10 to 90 |
| (b) High impact polystyrene | 90 to 10 |
| (c) Stable Brominated phthalate | 1 to 40 |
| (d) Antimony oxide | 0.4 - 12 |

The present kinds of compositions can also be formulated to include other ingredients in addition to those just described. These may be selected from among conventional materials commonly employed in polyphenylene ether resin blends, some of which are non-polymeric, others of which can be polymeric. Examples are plasticizers, mold release agents, melt viscosity reducers, colorants, stabilizers, antioxidants, mineral fillers (for example, clay), glass reinforcements, titanium oxides, lubricants, and so forth. Conventional amounts varying, for example, from less than 1 to greater than 50 percent by weight, per 100 percent by weight of the total composition, may be utilized.

The compositions can be prepared by any convenient method and, preferably, by forming a preblend of the ingredients, compounding the preblend by passing it through an extruder, and cooling the extrudate and cutting it into pellets or tablets. The tableted composition can later be formed into the desired article, as by molding at elevated temperatures.

Because of their thermoplastic nature, the present compositions are particularly suitable for injection molding processes. Using standard procedures and conditions, these blends can be molded to various shapes and sizes, and the resulting products have excellent combinations of physical properties, including good flame retardancy, improved impact and flow properties, excellent resistance to migration and blooming and good heat resistance.

## DESCRIPTION OF THE SPECIFIC EMBODIMENTS

The invention is further illustrated in the description below, which is set forth to show preferred or best embodiments.

Other modifications and variations of this invention are possible and are contemplated as within the scope of this invention. It should be understood, therefore, that changes may be made in the particular embodiments shown without departing from the principles of the invention or sacrificing its chief benefits.

## EXAMPLES 1-3 AND COMPARATIVE EXAMPLES A-G

The compositions shown in Table I were prepared by forming a dry blend of the ingredients, compounding the blend by passage through a 28mm Werner Pfleiderer twin-screw extruder at about 572-578°F. melt temperature, and cooling and chopping the extrudate into pellets. The pellets were molded into 0.125 inch-thick miniature test pieces, using a 4 ounce Newbury injection molding machine, an about 522-525°F. melt temperature, and an about 150°F. mold temperature. In addition, using the same conditions, molded test pieces having the dimensions 0.06 inch by 0.5 inch by 5 inches were prepared for the UL Subject 94 flame resistance test.

For comparison purposes, compositions were prepared and subjected to a back-to-back comparison with similar compositions of the present invention. In addition to the flammability test, other physical properties were measured on the compositions.

TABLE I. Composition (parts by weight)

| | Brominated Flame Retardant Additive | | | | Total %[2] Bromine |
|---|---|---|---|---|---|
| Example[1] | CN322 | PHT4 DIOL | FR40B | P68PB | |
| 1 | 10 | --- | --- | 6.3 | 6.7 |
| 2 | 12 | --- | --- | 5 | 6.7 |
| 3 | 14 | --- | --- | 3.7 | 6.7 |
| A | --- | 10 | --- | 6.2 | 6.7 |
| B | --- | 12 | --- | 4.9 | 6.7 |
| C | --- | 14 | --- | 3.6 | 6.7 |
| D | --- | --- | 10 | 7.6 | 6.6 |
| E | --- | --- | 12 | 6.6 | 6.6 |
| F | --- | --- | 14 | 5.6 | 6.7 |
| G[3] | --- | --- | --- | 13.5 | 6.7 |

45 pbw PPE (0.40 i.v.) - General Electric Company, poly(2,6-dimethyl 1,4-phenylene oxide with the intrinsic viscosity (as indicated) measured in chloroform at 25°C.

52.5 pbw HIPS - Huntsman AH 1897 grade of high impact polystyrene.

4.5 pbw AO - Amspec Chemical KR grade of antimony trioxide.

7.5 pbw KD1101 - Shell Chemical Company D 1101 grade of SBS block copolymer.

4 pbw 4,4'TDP - 4,4'-thiodiphenol

1 pbw HS-1 - Hoechst Corporation sodium lauryl sulfonate.

0.15 pbw of each of ZnS (zinc sulfide) and ZnO (zinc oxide)

2. All compositions also contained P68PB in an amount to augment the total bromine content of the PPE/HIPS formulation.

3. Comparative Example G also contained 7.5 pbw of A433 - an aromatic polyester oligomer.

TABLE II.

| Physical Properties | | | | | | | | |
|---|---|---|---|---|---|---|---|---|
| Example | HDT | FC | IZOD | Gardner | TYS | TE | 1/16" UL94 | Molded Part Appearance |
| 1 | 191 | 19.4 | 5.5 | 149 | 6300 | 54 | 2.6,V-0 | Beige Excellent |
| 2 | 189 | 20.5 | 5.6 | 167 | 6100 | 52 | 1.7,V-0 | Beige Excellent |
| 3 | 183 | 21.2 | 5.9 | 165 | 6000 | 68 | 1.7,V-0 | Beige Excellent |
| A | 208 | 19.7 | 6.2 | 137 | 6300 | 35 | 1.9,V-0 | Dark Beige Splay |
| B | 208 | 20.4 | 6.3 | 129 | 6200 | 39 | 2.6,V-0 | Dark Beige Sl. Splay |
| C | 207 | 22.6 | 6.5 | 139 | 6000 | 38 | 3.2,V-0 | Dark Beige Splay |
| D | 210 | 20.0 | 7.2 | 157 | 6200 | 46 | 2.4,V-0 | Dark Beige |
| E | 204 | 21.8 | 6.9 | 149 | 6100 | 26 | 3.1,V-0 | V.Dark Beige Specky |
| F | 205 | 23.0 | 7.5 | 167 | 6000 | 34 | 1.8,V-0 | V.Dark Beige Specky |
| G | 191 | 20.7 | 4.3 | 139 | 6300 | 31 | 1.5,V-0 | Beige Good |

In Table II, the following abbreviations for the physical tests have the following descriptions and

meanings:
HDT: Heat Deflection Temperature (°F), 1/4" x 1/2"x5" specimen (ASTM D648)
FC: Flow Channel (in.) determined at given molding temperature/10,000 psi injection
IZOD: Notched Izod Impact Strength (ft-lbs/in.-n.), 1/8" x 1/2" x 2 1/2" specimen (ASTM D256)
GARDNER: Drop-Dart Impact Energy (50% failure value) (in.-lbs.), 1/8" x 4" disc specimen (GE method)
TYS, TE: Tensile Yield Strength (psi) and Tensile Elongation At Break (%), 1/8" x 8 1/2" ASTM tensile specimen (ASTM D638)
1/16" UL94: Average Self-Extinguishing Time and V-Rating, 1/16" x 1/2" x 5" specimen (Underwriters Laboratories Bulletin 94)

As the above Table indicates, the formulations containing a flame retardant additive within the scope of this invention, Examples 1-3 (containing CN322), exhibit excellent property profiles and are superior in molding stability (as indicated by the molded part appearance) to the formulations containing flame retardant additives of similar but different chemical structure.

Also, the formulations of Examples 1-3 are generally superior in impact to the formulation containing a conventional non-plasticizing flame retardant (P68PB alone) with a plasticizer (A433).

## EXAMPLES 4-5 AND COMPARATIVE EXAMPLES H-I

The compositions shown in Table III were prepared by forming a dry blend of the ingredients, compounding the blend by passage through a 28mm Werner Pfleiderer twin-screw extruder at about 654-669°F. melt temperature, and cooling and chopping the extrudate into pellets. The pellets were molded into 0.125 inch-thick miniature test pieces, using a 4 ounce Newbury injection molding machine, an about 575-577°F. melt temperature, and an about 190°F. mold temperature. In addition, using the same conditions, molded test pieces having the dimension 0.06 inch by 0.5 inch by 5 inches were prepared for the UL Subject 94 flame resistance test.

For comparison purposes, a composition utilizing a conventional plasticizer in conjunction with a non-plasticizing flame retardant and a composition with a non-plasticizing flame retardant alone were prepared and subjected to a back-to-back comparison to similar compositions of the present invention.

TABLE III. Compositions (parts by weight)

| Example[1] | P68PB | Flow Promoter CN322 | Flow Promoter A433 | Total % Bromine |
|---|---|---|---|---|
| 4 | 5.3 | 2 | --- | 4.0 |
| 5 | 3.9 | 4 | --- | 3.9 |
| H | 6.7 | --- | 1.5 | 4.0 |
| I | 6.7 | --- | --- | 4.0 |

The designations P68PB, CN322 and A433 are as in Table I.

1. All compositions also contained (parts by weight):

65 pbw PPE (0.40 i.v.)

30 pbw HIPS

2.3 pbw AO

0.15 pbw ZnS

0.15 pbw ZnO

5 pbw KG 1651 - Shell Chemical Company G1651 grade of SEBS block copolymer.

1 pbw I 1010 - Ciba-Geigy 1010 grade of high molecular weight hindered phenolic antioxidant.

1.5 PE - Union Carbide Corporation GR8530 of linear low density polyethylene.

TABLE IV.

| Physical Properties | | | | | | | |
|---|---|---|---|---|---|---|---|
| Example | HDT | FC | IZOD | DYNATUP E TOT | TYS | TE | 1/16" UL94 |
| 4 | 271 | 13.0 | 5.9 | 337 | 8700 | 20 | 4.2,V-0 |
| 5 | 260 | 14.0 | 6.0 | 424 | 8650 | 19 | 6.3,V-1 |
| H | 264 | 13.6 | 6.2 | 268 | 8810 | 15 | 7.0,V-1 |
| I | 274 | 11.8 | 6.3 | 354 | 8880 | 16 | 5.7,V-1 |

In Table IV, the following abbreviation for the physical tests has the following description and meaning:

DYNATUP E TOT: Total Drop-Dart-Energy (in.-lbs.), 1/8" x 4" disc specimen (GE method, clamped specimen)

The remaining abbreviations are as set forth in Table II.

As the above Table indicates, the stable brominated phthalate compounds of the present invention (exemplified by CN322 in the examples) can function as both a flame retardant additive and as a flow promoter, even at low concentrations in compositions containing high amounts of PPE. By interpolation of the data from Examples 4 and 5, it may be seen that the stable brominated phthalate compounds of the present invention offer advantages and superior performance in flame retardancy and Dynatup values at similar flow channel values as compared to a conventional polyester plasticizer (A433).

EXAMPLES 6-7 AND COMPARATIVE EXAMPLE J

The compositions shown in Table V were prepared by forming a dry blend of the ingredients, compounding the blend by passage through a 28mm Werner Pfleiderer twin-screw extruder at an about 576-589 °F. melt temperature, and cooling and chopping the extrudate into pellets. The pellets were molded into 0.125 inch-thick miniature test pieces, using a 4 ounce Newbury injection molding machine, an about 525-528 °F melt temperature, and an about 150 °F. mold temperature. In addition, using the same conditions, molded test pieces having the dimensions 0.06 inch by 0.5 inch by 5 inches were prepared for the UL Subject 94 flame resistance test.

For comparison purposes, a composition utilizing the same bromine-containing flame retardant, but without a stable brominated phthalate compound of the present invention was prepared and subjected to back-to-back comparisons to similar compositions prepared according to the present invention.

TABLE V. Compositions (parts by weight)

| Example[1] | HG-HIPS | CN348 | CN322 | (W/O $TiO_2$) % Bromine |
|---|---|---|---|---|
| 6 | 66.2 | 31.5 | 2 | 10.4 |
| 7 | 66.7 | 29 | 4 | 10.3 |
| J | 65.8 | 33.5 | --- | 10.4 |

The designation CN322 is as above in Table I.

The following descriptions have the following meanings:

CN 348 is a concentrate consisting of 60 pbw low molecular weight tribrominated polystyrene/20 pbw antimony trioxide/20 pbw high impact polystyrene, with a calculated bromine content of about 41.2%, produced by Great Lakes Chemical Company.

HG-HIPS is a M 7800 HG grade of high gloss, core-shell high impact polystyrene, produced by Mobil Chemical Co.

1. All compositions also contained (parts by weight):
25 pbw PPE (0.46 i.v.)
7.5 pbw KG 1651
1 pbw PE
0.15 pbw ZnO
0.15 pbw ZnS
5 pbw $TiO_2$ - titanium dioxide pigment

The amounts of HG-HIPS used in combination with CN 348 were selected to give a total high impact polystyrene of 72.5 pbw for each blend.

TABLE VI.

| Physical Properties | | | | | | | | |
|---|---|---|---|---|---|---|---|---|
| Example | HDT | FC | IZOD | DYNATUP E FRACT | TYS | TE | 1/16" UL94 | 45° GLOSS |
| 6 | 201 | 19.5 | 3.6 | 170 | 5078 | 75 | 1.2,V-0 | 47 |
| 7 | 199 | 20.2 | 4.0 | 169 | 5154 | 89 | 1.6,V-0 | 50 |
| J | 208 | 17.7 | 3.6 | 154 | 5353 | 66 | 1.2,V-0 | 46 |

In Table VI, the following abbreviations for the physical tests have the following descriptions and meanings:

DYNATUP E FRACT: Drop-Dart Energy to Initiate Fracture (in.-lbs.), 1/8" x 4" disc specimen (GE method, unclamped specimen)

45° Gloss: 45° Surface Gloss (dimensionless), 1/8" x 4" disc specimen (GE method)

The remaining abbreviations are as set forth in TABLES II and IV.

As the above Table indicates, the stable brominated phthalate compounds of the present invention can function as effective flow promotors in low pbw PPE blends, as well as in high pbw PPE compositions (TABLE IV). As little as 2 pbw of CN322 markedly improves flow channel length and Dynatup values.

## EXAMPLES 8-10

The compositions shown in Table VII were prepared by forming a dry blend of the ingredients, compounding the blend by passage through a 28mm Werner Pfleiderer twin-screw extruder at an about 592-605° F. melt temperature, and cooling and chopping the extrudate into pellets. The pellets were molded into 0.125 inch-thick miniature test pieces, using a 4 ounce Newbury injection molding machine, an about 524-527° F. melt temperature, and an about 150° F. mold tempera ture. In addition, using the same conditions, molded test pieces having the dimensions 0.06 inch by 0.5 inch by 5 inches were prepared for the UL Subject 94 flame resistance test.

TABLE VII

| Example[1] | P68PB | CN322 | (W/O $TiO_2$) % Bromine |
|---|---|---|---|
| 8 | 7.4 | 8 | 6.7 |
| 9 | 3.6 | 14 | 6.7 |
| 10 | 1.7 | 17 | 6.7 |

All designations in TABLE VII are as set forth in the prior tables herein.

1. All compositions also contained (parts by weight):

50 pbw PPE (0.40 i.v.)
45 pbw HIPS
10 pbw KD 1101
4.4 pbw AO
1 pbw HS-1
0.15 pbw ZnS
0.15 pbw ZnO
5 pbw $TiO_2$
3 pbw BPA - Bisphenol A flow promotor additive.

TABLE VIII. Physical Properties

| Example | HDT | FC | IZOD | DYNATUP E TOT | TYS | TE | 1/16" UL94 |
|---|---|---|---|---|---|---|---|
| 8 | 209 | 15.4 | 7.6 | 392 | 6650 | 41 | 3.0,V-O |
| 9 | 189 | 18.0 | 7.9 | 421 | 6270 | 57 | 2.3,V-O |
| 10 | 185 | 19.4 | 8.1 | 381 | 6010 | 72 | 2.1,V-O |

In TABLE VIII the abbreviations are as set forth in the prior Tables herein.

TABLE VIII.

| Physical Properties | | | | | | | |
|---|---|---|---|---|---|---|---|
| Example | HDT | FC | IZOD | DYNATUP E TOT | TYS | TE | 1/16" UL94 |
| 8 | 209 | 15.4 | 7.6 | 392 | 6650 | 41 | 3.0,V-0 |
| 9 | 189 | 18.0 | 7.9 | 421 | 6270 | 57 | 2.3,V-0 |
| 10 | 185 | 19.4 | 8.1 | 381 | 6010 | 72 | 2.1,V-0 |

In TABLE VIII the abbreviations are as set forth in the prior Tables herein.

As the above Table indicates, the use of the stab brominated phthalate compounds of the present invention yields flame retardant compositions having excellent impact properties over a wide range of melt flow capability (as indicated by flow channel length).

## EXAMPLE 11 AND COMPARATIVE EXAMPLE K

The compositions shown in Table IX were prepared by forming a dry blend of the ingredients, compounding the blend by passage through a 28mm Werner Pfleiderer twin-screw extruder at an about 600° F. melt temperature, and cooling and chopping the extrudate into pellets. The pellets were molded into 0.125 inch-thick miniature test pieces, using a 4 ounce Newbury injection molding maching, an about 526° F. melt temperature, and an about 150° F. mold temperature. In addition, using the same conditions, molded test pieces having the dimensions 0.06 inch by 0.5 inch by 5 inches were prepared for the UL Subject 94 flame resistance test.

For comparison purposes, a composition utilizing a different brominated material as the sole bromine-containing component and a conventional plasticizer was prepared and subjected to a back-to-back comparison to a similar composition prepared according to the present invention.

TABLE IX

| Example[1] | HIPS | KD1101 | CN348 | CN322 | AO | A433 | % Bromine (W/O $TiO_2$) |
|---|---|---|---|---|---|---|---|
| 11 | 51.5 | 7.5 | 4.8 | 20 | 4.4 | --- | 8.2 |
| K | 43.8 | 10 | 31 | --- | --- | 11.5 | 9.0 |

All designations in TABLE IX are as set forth in the prior tables herein.

1. All compositions also contained (parts by weight):
   45 pbw PPE (0.40 i.v.)
   1 pbw PE
   0.15 pbw ZnS
   0.15 pbw ZnO
   5 pbw $TiO_2$

The amounts of the components set forth in TABLE IX were selected such that, for each blend, the total HIPS content (from HIPS and CN348) and total AO content (from AO and CN348) yielded a value of pbw HIPS + pbw KD1101 = 60 and a ratio of % Br / % AO = 2.06.

TABLE X.

| Physical Properties | | | | | | | |
|---|---|---|---|---|---|---|---|
| Example | HDT | FC | IZOD | DYNATUP E FRACT | TYS | TE | 1/16" 94 |
| 11 | 186 | 20.0 | 5.3 | 333 | 5850 | 62 | 2.0,V-O |
| K | 191 | 20.5 | 5.6 | 62 | 5910 | 51 | 1.9,V-O |

In TABLE X, the abbreviations are as set forth in the prior Tables herein.

As the above Table indicates, even with less impact modifier (KD1101) and a lower total % bromine, the composition containing a stable brominated phthalate compound according to the present invention (CN322) is much improved in Dynatup value, equivalent in flame retardancy and comparable in other physical properties as compared to a composition containing a different, conventional brominated flame retardant agent (CN348 alone) and a conventional plasticizer (A433).

## EXAMPLES 12-15

The compositions shown in Table XI were prepared by forming a dry blend of the ingredients, compounding the blend by passage through a 28mm Werner Pfleiderer twin-screw extruder at an about 596-605° F. melt temperature, and cooling and chopping the extrudate into pellets. The pellets were molded into 0.125 inch-thick miniature test pieces, using a 4 ounce Newbury injection molding machine, an about 522-527° F. melt temperature, and an about 150° F. mold temperature. In addition, using the same conditions, molded test pieces having the dimensions 0.06 inch by 0.5 inch by 5 inches were prepared for the UL Subject 94 flame resistance test.

TABLE XI. Compositions (parts by weight)

| Example[1] | HIPS | CN348 | CN322 | AO | (W/O $TiO_2$) % Bromine |
|---|---|---|---|---|---|
| 12 | 62.8 | 23.3 | 7.5 | 1.6 | 9.7 |
| 13 | 63.5 | 19.8 | 11 | 2.4 | 9.7 |
| 14 | 64.2 | 16.3 | 14.5 | 3.2 | 9.7 |
| 15 | 64.9 | 12.8 | 18 | 4 | 9.7 |

All designations in TABLE XI are set forth in the prior tables herein.

1. All compositions also contained (parts by weight):

30 pbw PPE (0.46 i.v.)
7.5 pbw KD1101
1 pbw PE
0.15 pbw ZnO
0.15 pbw ZnS
5 pbw $TiO_2$

The amounts of the components set forth in TABLE XI were selected such that, for each blend, the total HIPS content (from HIPS and CN348) was 67.5 pbw and the total AO content (from CN348 and AO) yielded a ratio of % Br/% AO of 2.07.

TABLE XII.

| Physical Properties | | | | | | | |
|---|---|---|---|---|---|---|---|
| Example | HDT | FC | IZOD | DYNATUP E FRACT | TYS | TE | 1/16" UL94 |
| 12 | 206 | 19.6 | 3.7 | 108 | 5480 | 67 | 1.4,V-O |
| 13 | 198 | 21.0 | 4.0 | 133 | 5270 | 70 | 1.4,V-O |
| 14 | 188 | 22.6 | 3.9 | 199 | 5040 | 73 | 1.1,V-O |
| 15 | 184 | 24.1 | 3.9 | 258 | 4880 | 85 | 1.0,V-O |

In TABLE XII, the abbreviations are as set forth in the prior tables herein.

As the above Table indicates, gradual replacement of a conventional non-plasticizing flame retardant (CN348) with a stable brominated phthalate compound of the present invention (CN322) produces compositions exhibiting increasingly improved melt flow and Dynatup impact values.

Thus, products with controlled heat deflection, melt flow and impact properties are clearly feasible and attainable via combinations of a stable brominated phthalate compound (in this instance CN322) with a conventional non-plasticizing supplementary flame retardant.

## EXAMPLES 16-20 AND COMPARATIVE EXAMPLES L-P

The compositions shown in Table XIII were prepared by forming a dry blend of the ingredients, compounding the blend by passage through a 28mm Werner Pfleiderer twin-screw extruder at an about 572-579° F. melt temperature, and cooling and chopping the extrudate into pellets. The pellets were molded into 0.125 inch-thick miniature test pieces, using a 4 ounce Newbury injection molding machine, an about 527-529° F. melt temperature, and an about 150° F. mold temperature. In addition, using the same conditions, molded test pieces having the dimensions 0.06 inch by 0.5 inch by 5 inches were prepared for the UL Subject 94 flame resistance test.

For comparison purposes, compositions containing a conventional brominated flame retardant and a conventional plasticizer were prepared and subjected to a back-to-back comparison to similar compositions prepared according to the present invention.

TABLE XIII. Compositions (parts by weight)

| Example[1] | FR348 | CN322 | AO | A433 | (W/O $TiO_2$) % Bromine | % Br/% AO |
|---|---|---|---|---|---|---|
| 16 | 9.46 | 13 | 6.2 | --- | 9.2 | 2.0 |
| 17 | 9.27 | 13 | 5.0 | --- | 9.2 | 2.5 |
| 18 | 9.08 | 13 | 3.7 | --- | 9.2 | 3.3 |
| 19 | 8.88 | 13 | 2.4 | --- | 9.2 | 5.0 |
| 20 | 8.69 | 13 | 1.2 | --- | 9.2 | 9.9 |
| L | 18.49 | --- | 6.4 | 7.5 | 9.2 | 2.0 |
| M | 18.29 | --- | 5.1 | 7.5 | 9.2 | 2.5 |
| N | 18.09 | --- | 3.8 | 7.5 | 9.2 | 3.3 |
| O | 17.89 | --- | 2.5 | 7.5 | 9.2 | 4.9 |
| P | 17.69 | --- | 1.2 | 7.5 | 9.2 | 10.2 |

The designation FR 348 (or CN348L) has the following meaning:

FR348 (or CN348L) is a low molecular weight tribrominated polystyrene, with a calculated bromine content of about 69.2%, produced by Great Lakes Chemical Company.

1. All compositions also contained (parts by weight):

35 pbw PPE (0.40 i.v.)
62.5 pbw HIPS
7.5 pbw KD1101
1 pbw PE
0.15 ZnO
0.15 ZnS
5 pbw $TiO_2$

All other designations in TABLE XIII are as set forth in the prior tables herein.

TABLE XIV.

| Physical Properties | | | | | | | |
|---|---|---|---|---|---|---|---|
| Example | HDT | FC | IZOD | DYNATUP E FRACT | TYS | TE | 1/16" UL94 |
| 16 | 200 | 21.6 | 3.8 | 367 | 5090 | 75 | 1.7,V-O |
| 17 | 201 | 21.5 | 3.8 | 360 | 5130 | 90 | 1.8,V-O |
| 18 | 200 | 21.6 | 4.2 | 393 | 5100 | 103 | 2.2,V-O |
| 19 | 200 | 21.5 | 4.7 | 351 | 5090 | 85 | 4.2,V-O |
| 20 | 199 | 21.6 | 5.0 | 337 | 5050 | 104 | 7.4,V-1 |
| L | 197 | 21.9 | 3.9 | 81 | 5170 | 79 | 1.6,V-O |
| M | 200 | 22.0 | 4.3 | 72 | 5290 | 78 | 2.0,V-O |
| N | 199 | 22.2 | 4.4 | 132 | 5230 | 94 | 2.3,V.O |
| O | 201 | 22.3 | 4.9 | 170 | 5250 | 93 | 3.0,V-O |
| P | 196 | 22.1 | 5.2 | 229 | 5140 | 79 | 5.4,V-1 |

In TABLE XIV, the abbreviations are as set forth in the prior tables herein.

As the above Table indicates, depending upon the AO level, materials with a range of UL94 behavior are obtainable via combinations of a stable brominated phthalate compound of the present invention (CN322) and a conventional brominated flame retardant (FR348).

Furthermore, as compared to corresponding blends containing a conventional plasticizer (A433) and a conventional brominated flame retardant (FR348), the blends containing the stable brominated phthalate compound (CN322) are notably superior in Dynatup.

## EXAMPLE 21 AND COMPARATIVE EXAMPLE Q

The compositions shown in Table XV were prepared by forming a dry blend of the ingredients, compounding the blend by passage through a 53mm Werner Pfleiderer twin-screw extruder at an about 550 °F. melt temperature, and cooling and chopping the extrudate into pellets. The pellets were molded into 0.125 inch-thick miniature test pieces, using a 4 ounce Newbury injection molding machine, at an about 519-522 °F. melt temperature, and an about 150 °F. mold temperature. In addition, using the same conditions, molded test pieces having the dimensions 0.06 inch by 0.5 inch by 5 inches were prepared for the UL Subject 94 flame resistance test.

For comparison purposes, a composition containing a conventional brominated flame retardant and a different brominated phthalate material was prepared and subjected to a back-to-back comparison to a similar composition prepared according to the present invention.

TABLE XV. Composition (parts by weight)

| Example[1] | P68PB | CN348L | FR40B | CN322 | BPA | (W/O $TiO_2$) % Bromine |
|---|---|---|---|---|---|---|
| 21 | --- | 4.4 | --- | 13 | 4 | 6.7 |
| Q | 3.7 | --- | 17 | --- | 2 | 6.6 |

All designations in TABLE XV are as set forth in the prior tables herein.

1. All compositions also contained (parts by weight):

50 pbw PPE (0.40 i.v.)
45 pbw HIPS
10 pbw KD1101
4.4 pbw AO
1 pbw HS-1
0.15 pbw ZnS
0.15 pbw ZnO
5 pbw $TiO_2$

TABLE XVI.

| Physical Properties | | | | | | | |
|---|---|---|---|---|---|---|---|
| Example | HDT | FC | IZOD | DYNATUP E TOT | TYS | TE | 1/16" UL94 |
| 21 | 197 | 18.5 | 6.8 | 377 | 6366 | 55 | 2.4,V-O |
| Q | 203 | 22.0 | 8.9 | 393 | 6400 | 34 | 1.8,V-O |

In TABLE XVI, the abbreviations are as set forth in the prior tables herein.

As the above Table indicates, the blend containing the stable brominated phthalate compound of the present invention (CN322) exhibits an excellent combination of physical properties, comparable to those of the blend containing the conventional additives.

However, as will be shown below, the blend containing the stable brominated phthalate compound of the present invention exhibits vastly superior results upon scale up of the production run to a large scale molding trial. For this test, the compositions shown in TABLE XV were molded into a rectangular tray 8" x 22" x 2" weighing about 1.6 lbs. through a center-gated box-tool mold using a 700 ton, 70 ounce HPM injection molding machine at an about 529-530° F. melt temperature and an about 60 second total cycle time.

The compositions of Example 21 yielded good-looking, beige parts, exhibiting no evidence of thermal decomposition. There was some minor oxidation noted on the melt purge (i.e., drool).

The composition of Comparative Example Q exhibited strong odor, gassing and splay upon molding. There was brownish degradation around the sprue and a signficant amount of oily residue in the mold cavity. There was also oily droplets condensed on the molded part surface and the drool browned quickly.

From the above, it is shown that the compositions containing the stable brominated phthalate compound of the present invention exhibits good physical properties yet is superior in large part moldability whereas

the composition according to the prior art degrades badly under the more severe shear/residence-time conditions associated with large-part molding.

EXAMPLE 22

The composition shown in Table XVII was prepared by forming a dry blend of the ingredients, compounding the blend by passage through a 53mm Werner Pfleiderer twin-screw extruder at an about 520° F. melt temperature, and cooling and chopping the extrudate into pellets. The pellets were molded into 0.125 inch-thick miniature test pieces, using a 4 ounce Newbury injection molding machine, an about 526° F. melt temperature, and at an about 150° F. mold temperature. In addition, using the same conditions, molded test pieces having the dimensions 0.06 inch by 0.5 inch by 5 inches were prepared for the UL Subject 94 flame resistance test.

TABLE XVII

| Example[1] | HDT | FC | IZOD | DYANTUP E FRACT | TYS | TE | 1/16" UL94 |
|---|---|---|---|---|---|---|---|
| 22 | 199 | 22.5 | 5.2 | 250 | 5543 | 84 | 1.8,V-O |

All designations in TABLE XVII are as set forth in the prior tables herein.

1. The composition had about 9.4% bromine content and a % Br/% AO ratio of about 3.7 contained (parts by weight):

35 pbw PPE (0.40 i.v.)
59 pbw HIPS
7.5 pbw KD1101
17 pbw CN348
12 pbw CN322
1 pbw PE
0.15 pbw ZnO
0.15 pbw ZnS
5 pbw $TiO_2$

As can be seen from the above Table, the composition exhibits an excellent combination of good physical properties.

Moreover, the composition exhibits excellent results upon scale-up of the production run to a large scale molding trial. For these tests, the composition shown in TABLE XVII was molded into a CRT housing of approximately rectangular dimensions of about 13" x 14" x 6" deep. The housing is commonly referred to as a "Clamshell" design with ribs, grillwork and various textured surfaces, weighs about 2.1 lbs. and was molded through a center-gated mold using a 700 ton, 70 ounce HPM injection molding machine at melt temperatures of about 530° F. and about 560° F., an about 153-154° F. mold, at various cycle times.

The molded part had very good appearance at a 60 second (normal) cycle time at a 4-6 second injection speed both at about 530° F. and about 560° F. melt temperatures.

The molded part had an overall very good appearance, with very slight gas marks on a side surface, at a 300 second cycle time at a 4 second injection speed at about 530° F. melt temperature.

The molded part had a very good appearance at a 120 second cycle time at a 4 second injection speed at about 560°F. melt temperature.

The composition exhibited only a couple of flow irregularities at a high injection speed of 2 seconds.

As can be seen from the foregoing, the compositions of the present invention exhibit excellent moldability properties in a commercial production-type injection molding tool under various molding conditions.

## EXAMPLE 23-29

The compositions shown in Table XVIII were prepared by forming a dry blend of the ingredients, compounding the blend by passage through a 28mm Werner Pfleiderer twin-screw extruder at about 580°F. melt temperature, and cooling and chopping the extrudate into pellets. The pellets were molded into 0.125 inch-thick miniature test pieces, using a 4 ounce Newbury injection molding machine, an about 580°F. melt temperature, an about 190°F. mold temperature. In addition, using the same conditions, molded test pieces having the dimensions 0.06 inch by 0.5 inch by 5 inches were prepared for the UL Subject 94 flame resistance test.

TABLE XVIII. Compositions (parts by weight)

| Example[1] | PPE I.V. | HS-1 | R-1974 |
|---|---|---|---|
| 23 | .46 | --- | --- |
| 24 | .40 | --- | --- |
| 25 | .46 | 2 | --- |
| 26 | .40 | 2 | --- |
| 27 | .46 | --- | 5 |
| 28 | .46 | 2 | 5 |
| 29 | .40 | 2 | 5 |

R-1974 is poly(neopentylene) phthalate, a non-flame retardant plasticizer.

The remaining designations in the table have the meanings set forth in the prior tables.

1. All compositions also contained (parts by weight):

63 pbw PPE
16 pbw CN322
3 pbw AO
0.15 pbw ZnO
0.15 pbw ZnS
1 pbw PE
4 pbw KG1651
17.5 pbw HG90 - a clay filler

TABLE XIX.

| Physical Properties | | | | | | | | | | | |
|---|---|---|---|---|---|---|---|---|---|---|---|
| Example | HDT | FC | MV | IZOD | DYNATUP E TOT | E FRACT | TE | TYS | FM | FS | 1/16" UL94 |
| 23 | 266 | 9.7 | 3420 | 1.7 | 416 | 416 | 18 | 10,840 | 510,100 | 15,400 | V-O,1.3 |
| 24 | 263 | 10.9 | 3140 | 1.5 | 316 | 316 | 15 | 10,600 | 510,100 | 15,100 | V-O,1.2 |
| 25 | 256 | 11.2 | 2940 | 7.1 | 430 | 398 | 27 | 8,780 | 427,600 | 12,800 | V-O,2.0 |
| 26 | 256 | 11.0 | 2890 | 6.7 | 434 | 408 | 22 | 9,080 | 435,300 | 13,300 | V-O,2.6 |
| 27 | 214 | 14.9 | 2300 | 1.6 | 125 | 125 | 17 | 10,140 | 498,700 | 14,200 | V-O,2.8 |
| 28 | 225 | 15.8 | 2160 | 5.3 | 355 | 339 | 20 | 9,100 | 421,800 | 12,700 | V-O,2.2 |
| 29 | 220 | 15.1 | 2170 | 5.0 | 355 | 339 | 19 | 9,140 | 429,900 | 12,800 | V-O,1.1 |

The following designations have the following meanings and descriptions.

MV - melt viscosity at 1500 sec $^{-1}$ and 540° F.

FM - flexural modulus measured according to ASTM 0.638.

FS - flexural strength measured according to ASTM 0.638.

The remaining designations are as set forth in the prior tables herein.

As the above Table indicates, a stable brominated phthalate compound of the present invention plasticizes both 0.40 and 0.46 i.v. PPE resin and shows a synergistic effect upon impact strength upon the additive of as little as 2 pbw of HS-1. Also, combinations of a stable brominated phthalate compound of the present invention with non-flame retardant plasticizers (R1974) yields compositions exhibiting very good flow properties without loss of the V-O rating in the UL94 test.

## EXAMPLES 30-40

The compositions shown in Table XX were prepared by forming a dry blend of the ingredients, compounding the blend by passage through a 28mm Werner Pfleiderer twin-screw extruder at about 540° F. melt temperature, and cooling and chopping the extrudate into pellets. The pellets were molded into 0.125 inch-thick miniature test pieces, using a 4 ounce Newbury injection molding machine, an about 505° F. melt temperature, and an about 150° F. mold temperature. In addition, using the same conditions, molded test pieces having the dimensions 0.06 inch by 0.5 inch by 5 inches were prepared for the UL Subject 94 flame resistance test.

TABLE XX. Compositions (parts by weight)

| Example | PPE | IV | CN322 | ZnS | ZnO | HS-1 | PE | AO | DOM | K1101 | HIPS |
|---|---|---|---|---|---|---|---|---|---|---|---|
| 30(#1) | 66.4 | .40 | 28.5 | .3 | .3 | --- | -- | 5.15 | --- | --- | --- |
| 31(#2) | 66.4 | .40 | 26.7 | .3 | .3 | --- | -- | 4.91 | 1.33 | --- | --- |
| 32 | #1 | (60) | --- | -- | -- | --- | 1.5 | --- | --- | --- | 40 |
| 33 | #1 | (60) | --- | -- | -- | 2.0 | --- | --- | --- | --- | 40 |
| 34 | #1 | (60) | --- | -- | -- | --- | --- | --- | --- | 5.0 | 40 |
| 35 | #1 | (60) | --- | -- | -- | 2.0 | 1.5 | --- | --- | 5.0 | 40 |
| 36 | #2 | (60) | --- | -- | -- | --- | 1.5 | --- | --- | --- | 40 |
| 37 | #2 | (60) | --- | -- | -- | 2.0 | --- | --- | --- | --- | 40 |
| 38 | #2 | (60) | --- | -- | -- | --- | --- | --- | --- | 5.0 | 40 |
| 39 | #2 | (60) | --- | -- | -- | 2.0 | 1.5 | --- | --- | 5.0 | 40 |
| 40 | #2 | (55) | --- | -- | -- | 2.0 | 1.5 | --- | --- | 5.0 | 45 |

The designation DOM has the following meaning:

DOM - dioctyl maleate.

The remaining designations in the above table are as set forth in the prior tables herein.

Examples 30 and 31 show PPE-based concentrate, useful in their own right, which are later used in Examples 32-40 (The amount of PPE concentrate utilized in each of Examples 32-40 is shown in parentheses).

TABLE XXI.

| Physical Properties | | | | | | | | | | | | | |
|---|---|---|---|---|---|---|---|---|---|---|---|---|---|
| | | | | DYNATUP IMPACT (in.-lbs) | | | Tensile YLD STR | Tensile ULT STR | Tensile Elong | Flex Modulus | Flex Yield | UL 94 Rating @ 1/16 |
| Example | HDT | FL | IZOD | E max-1 | E total | E frac | (psi) | (psi) | (%) | (psi) | (psi) | (sec.) |
| 30 | 197 | 17.5 | 0.4 | 7 | 12 | | 9900 | 7700 | 17 | 305000 | 11400 | 1.3,V-O |
| 31 | 196 | 19.5 | 0.4 | 15 | 20 | | 10100 | 8800 | 16 | 334000 | 12300 | 1.5,V-O |
| 32 | 189 | 21.0 | 1.7 | 65 | 96 | | 6700 | 5800 | 49 | 320000 | 8500 | 2.4,V-O |
| 33 | 193 | 22.0 | 1.7 | 116 | 179 | | 7100 | 5900 | 44 | 326000 | 9200 | 2.9,V-O |
| 34 | 192 | 19.5 | 4.4 | 149 | 232 | | 6400 | 5400 | 54 | 297000 | 8300 | 1.8,V-O |
| 35 | 196 | 20.0 | 5.3 | 273 | 364 | | 6300 | 5200 | 50 | 284000 | 8000 | 2.8,V-O |
| 36 | 189 | 22.0 | 1.6 | 106 | 159 | | 6700 | 5800 | 46 | 318000 | 8400 | 1.5,V-O |
| 37 | 194 | 23.0 | 1.6 | 77 | 95 | | 6900 | 5800 | 46 | 321000 | 8900 | 3.3,V-O |
| 38 | 190 | 20.5 | 3.8 | 207 | 307 | | 6100 | 5200 | 60 | 297000 | 8000 | 2.2,V-O |
| 39 | 192 | 21.5 | 4.7 | 217 | 308 | | 5900 | 4900 | 50 | 276000 | 7800 | 3.6,V-O |
| 40 | 193 | 21.0 | 6.2 | 203 | 293 | 235 | 5700 | 4900 | 61 | 280000 | 7200 | 4.8,V-O |

As the above Table indicates, PPE-based flame retardant concentrates can easily be prepared from PPE and a stable brominated phthalate compound of the present invention, with or without additives. The concentrates can be diluted with HIPS to yield resins with excellent flow, impact, flame retardant and heat deflection properties.

## EXAMPLE 41 AND COMPARATIVE EXAMPLE R

The following Examples compare the tendency of large scale molded parts to exhibit juicing and mold deposit in a commercial size production run.

The compositions were prepared by forming a dry blend of the ingredients, compounding the blend by passage through a 53mm Werner Pfleiderer twin-screw twin-screw extruder at an about 550° F. melt temperature, and cooling and chopping the extrudate into pellets. The pellets were molded into 0.125 inch-thick miniature test pieces, using a 4 ounce Newbury injection molding machine, an about 520° F. melt temperature, and an about 150° F. mold temperature.

For comparison purposes, a composition was prepared and subjected to a back-to-back comparison to a similar composition prepared according to the present invention.

Example 41 contained 15 pbw of CN-322 while Comparative Example R contained 15 pbw A433.

Both compositions also contained (parts by weight):

50 pbw PPE (0.46 i.v.)
50 pbw HIPS
0.15 pbw ZnO
0.15 pbw ZnS

The compositions were each injection molded into a tray mold using a 700-ton, 70 ounce HPM injection molding machine at an about 525° F. melt temperature. The physical properties of the resulting molded pieces are set forth in TABLE XXII below.

TABLE XXII.

| Physical Properties | | | | | | | | | | | |
|---|---|---|---|---|---|---|---|---|---|---|---|
| Example | HDT(°F) | FC(in) | IZOD(*) | DYNATUPE Max | E Tot | TYS(psi) | TE(%) | FM(psi) | FS(psi) | Juice LENGTH (mm) | ESC (mm) |
| R | 170 | 19 | 3.2 | 100 | 202 | 7200 | 34 | 336,000 | 9,800 | ≫75 | 0 |
| 41 | 204 | 15 | 3.8 | 79 | 226 | 7800 | 32 | 346,000 | 10,300 | 14 | 0 |

* ft.lb/in-n.

In the table, the following designations have the following descriptions and meanings:

Juice Length: - sum of lengths of liquid deposited on lower mold vents of tray mold.

ESC: - average crack length of 5 tray parts after 1 hr. at 170°F. heat aging.

The remaining designations are as set forth in the prior tables herein.

As can be seen, compositions according to the present invention exhibit significantly less mold deposit (juicing) than compositions containing a conventional plasticizer.

The above-mentioned patents are incorporated herein by reference.

Other modifications and variations of this invention are possible and are contemplated as within the scope of this invention. For example, instead of poly(2,6-dimethyl-1,4-phenylene ether) there can be substituted poly(2,6-dimethyl-co-2,3,6-trimethyl-1,4-phenylene ether). It should be understood, therefore, that changes may be made in the particular embodiments shown without departing from the principles of the invention or sacrificing its chief benefits.

## Claims

1. A flame retardant thermoplastic composition comprising:
(a) a polyphenylene ether resin;
(b) a rubber-modified alkenyl aromatic resin;
(c) a stable brominated phthalate compound in an amount which improves the flame retardancy of the combination of (a) and (b); and
(d) antimony oxide in an amount which synergistically enhances the flame retardancy of the combination of (a), (b) and (c).

2. The composition of Claim 1, in which component (a) is present in an amount of from about 10 to about 90 parts by weight and component (b) is present in an amount of from about 90 to about 10 parts by weight based on 100 parts by weight of (a) and (b).

3. The composition of Claim 2, in which component (c) is present in an amount of from about 1 to about 40 parts by weight and component (d) in an amount from about 0.4 to about 12 parts by weight for each 100 parts by weight of (a) and (b) combined.

4. The composition of Claim 1, in which the polyphenylene ether is a homopolymer or copolymer containing structural units of the formula

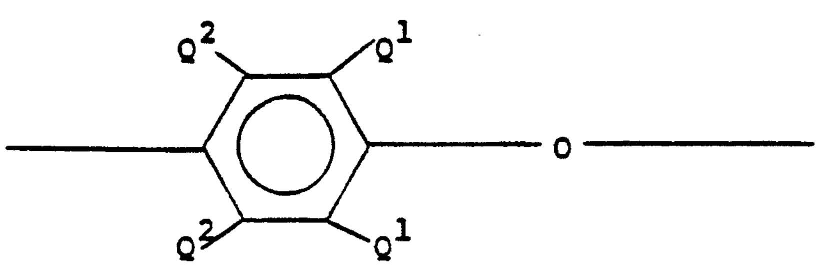

in which for each of these units independently each $Q^1$ is selected from hydrogen, halogen, primary or secondary lower alkyl having up to seven carbon atoms, phenyl, haloalkyl or aminoalkyl wherein at least two carbon atoms separate the halogen or nitrogen atom from the benzene ring, hydrocarbonoxy, or halohydrocarbonoxy wherein at least two carbon atoms separate the halogen and oxygen atoms; and each

$Q^2$ is independently selected from hydrogen, halogen, primary or secondary lower alkyl, phenyl, haloalkyl, hydrocarbonoxy or halohydrocarbonoxy as defined in $Q^1$.

5. The composition of Claim 1, in which the polyphenylene ether is poly(2,6-dimethyl-1,4-phenylene ether).

6. The composition of Claim 5, in which the poly(2,6-dimethyl-1,4-phenylene ether) has an intrinsic viscosity of about 0.19 to 0.87 deciliters per gram in chloroform at 25° C.

7. The composition of Claim 1, in which the polyphenylene ether is poly(2,6-dimethyl-co-2,3,6-trimethyl-1,4-phenylene ether).

8. The composition of Claim 1, in which component (c) is a compound which maintains about 100% of its initial weight up to a temperature of about 510° F., as measured by thermogravimetric analysis.

9. The composition of Claim 1, in which component (c) is a compound which maintains about 60% of its initial weight up to a temperature of about 630° F., as measured by thermogravimetric analysis.

10. The composition of Claim 1, in which component (c) is comprised of bis(2-ethylhexyl)-tetrabromophthalate.

11. A flame retardant polyphenylene ether-based concentrate adaptable for use in admixture with a normally flammable thermoplastic resin, said concentrate consisting essentially of:

(a) a polyphenylene ether;

(b) a stable brominated phthalate compound; and

(c) antimony oxide, said concentrate being used in an amount which renders the resulting composition comprised of (a), (b), (c) and the normally flammable thermoplastic resin flame retardant.

12. The concentrate of Claim 11, in which the polyphenylene ether is a homopolymer or copolymer containing structural units of the formula

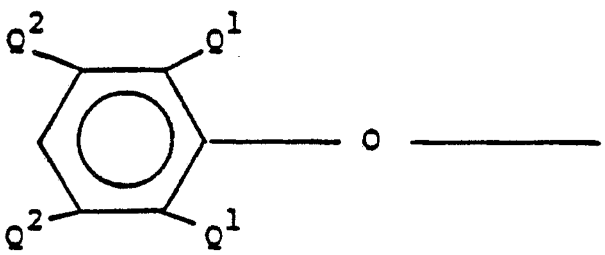

in which for each of these units independently each $Q^1$ is hydrogen, halogen, primary or secondary lower alkyl having up to seven carbon atoms, phenyl, haloalkyl or aminoalkyl wherein at least two carbon atoms separate the halogen or nitrogen atom from the benzene ring, hydrocarbonoxy, or halohydrocarbonoxy wherein at least two carbon atoms separate the halogen and oxygen atoms; and each $Q^2$ is independently hydrogen, halogen, primary or secondary lower alkyl, phenyl, haloalkyl, hydrocarbonoxy or halohydrocarbonoxy as defined in $Q^1$.

13. The composition of Claim 11, in which the polyphenylene ether is poly(2,6-dimethyl-1,4-phenylene ether).

14. The composition of Claim 11 in which the poly(2,6-dimethyl-1,4-phenylene ether) has an intrinsic viscosity of about 0.19 to 0.87 deciliters per gram in chloroform at 25° C.

15. The composition of Claim 11, in which the polyphenylene ether is poly(2,6-dimethyl-co-2,3,6-trimethyl-1,4-phenylene ether).

16. The composition of Claim 11, in which component (b) is a compound which maintains about 100% of its initial weight up to a temperature of about 510° F., as measured by thermogravimetric analysis.

17. The composition of Claim 11, in which component (b) is a compound which maintains about 60% of its initial weight up to a temperature of about 630° F., as measured by thermogravimetric analysis.

18. The composition of Claim 11, in which component (b) is comprised of bis(2-ethylhexyl)-tetrabromophthalate.

19. An article molded from the composition of Claim 1.

20. An article molded from the concentrate of Claim 12.

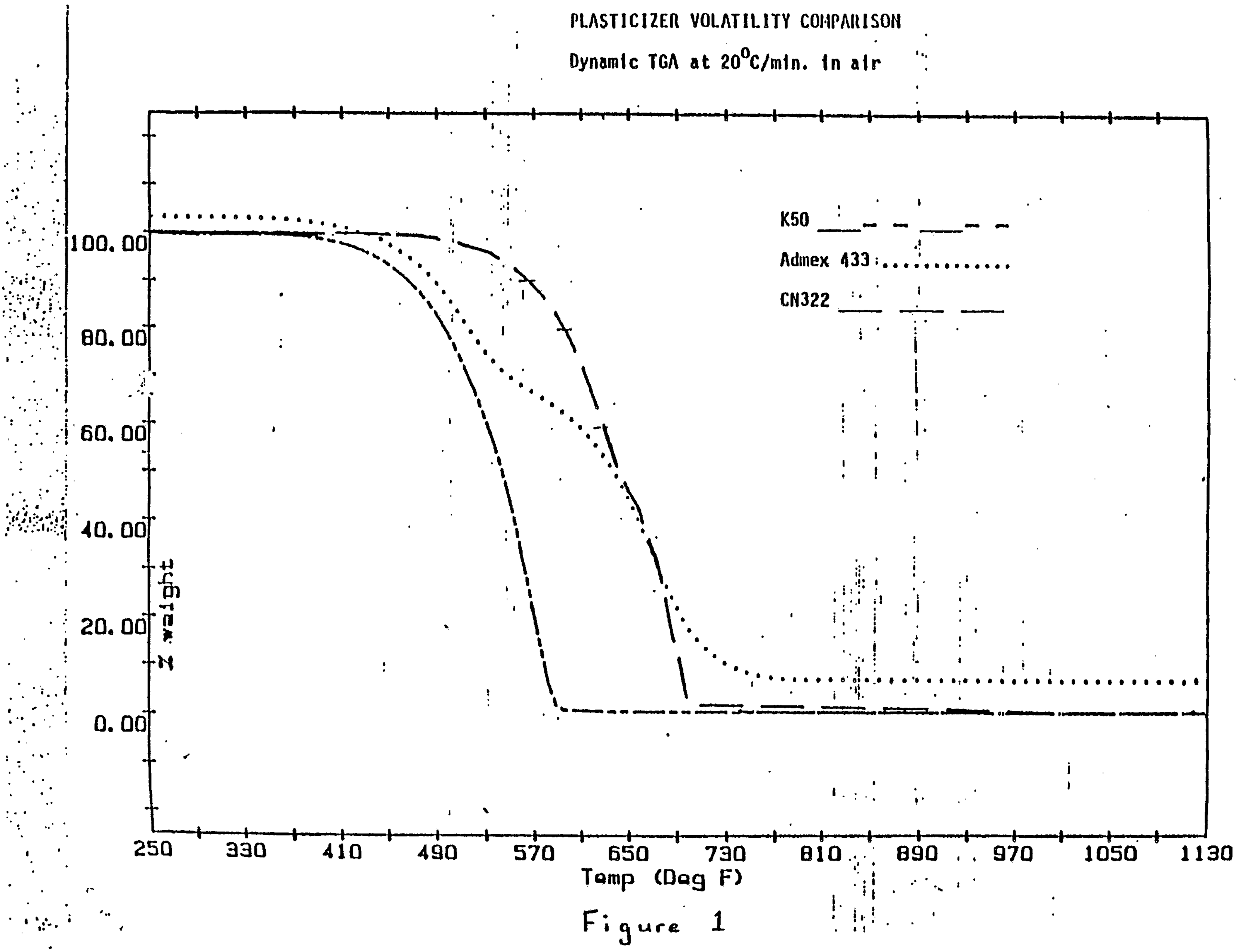
PLASTICIZER VOLATILITY COMPARISON
Dynamic TGA at 20°C/min. in air
K50
Admex 433
CN322
100.00
80.00
60.00
40.00
20.00
0.00
% weight
250
330
410
490
570
650
730
810
890
970
1050
1130
Temp (Deg F)

Figure 1